(19) Europäisches Patentamt
European Patent Office
Office européen des brevets

(11) Publication number: 0 206 817 B1

(12) EUROPEAN PATENT SPECIFICATION

(45) Date of publication of the patent specification: 07.02.90

(51) Int. Cl. [5]: C 08 F 4/64, C 08 F 10/00

(21) Application number: 86304913.6

(22) Date of filing: 25.06.86

# (54) Catalyst for producing olefin polymers and polymerization process using the catalyst.

(30) Priority: 25.06.85 JP 139951/85

(43) Date of publication of application: 30.12.86 Bulletin 86/52

(45) Publication of the grant of the patent: 07.02.90 Bulletin 90/06

(84) Designated Contracting States: BE DE FR GB IT NL

(56) References cited:
EP-A-0 111 903
FR-A-2 144 080
FR-A-2 265 768
GB-A-2 058 093
US-A-4 335 016

**The file contains technical information submitted after the application was filed and not included in this specification**

(73) Proprietor: SUMITOMO CHEMICAL COMPANY, LIMITED
Kitahama 4-chome 5-33
Chuo-ku Osaka 541 (JP)

(72) Inventor: Sasaki, Toshio
9-422, Yushudainishi-1-chome
Ichihara-shi (JP)
Inventor: Katao, Masaaki
135-3503 Iriyamazu
Ichihara-shi (JP)
Inventor: Shiga, Akinobu
832-4, Shiizu
Ichihara-shi (JP)
Inventor: Kawai, Kiyoshi
2434-155, Hanazonocho
Chiba-shi (JP)

(74) Representative: Vossius & Partner
Siebertstrasse 4 P.O. Box 86 07 67
D-8000 München 86 (DE)

EP 0 206 817 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convension).

LIBERGRAF, STOCKHOLM 1990

## Description

This invention relates to a catalyst for producing olefin polymers, and to a process for producing olefin polymers using the catalyst. More particularly, the present invention relates to:

(1) a solid catalyst component having high catalytic activity not only per unit amount of transition metal but also per unit amount of solid catalyst in various polymerization processes (e. g. slurry polymerization, gas phase polymerization, high temperature solution polymerization, high pressure ionic polymerization);
(2) a catalyst system containing the solid catalyst component; and
(3) a process for producing olefin polymers using the catalyst system.

The use of high activity catalysts in the production of olefin polymers is of high industrial value because it requires no removal of catalyst residue from olefin polymers produced and can provide a simplified process for producing olefin polymers. It is necessary that such a high activity catalyst has high catalytic activity not only per unit amount of transition metal but also per unit amount of solid catalyst.

When a metal halide, such as titanium halide, magnesium halide or the like is used in solid catalysts, high catalytic activity per unit of solid catalyst is necessary also from the standpoint of countermeasures which must be taken to avoid corrosion of equipment and apparatus caused by active halogen.

Catalysts consisting of a transition metal compound (e. g. titanium tetrachloride) supported by a carrier (e. g. a magnesium compound) have recently been developed. These catalysts have higher catalytic activities than conventional catalysts but are not satisfactory in catalytic activity per amount of solid catalyst (see, for example, Belgian Patent No. 759 601, Japanese Patent publication No. 46269/1972 and Japanese Patent publication No. 26383/1972).

As catalyst systems using a solid product obtained by reducing a titanium compound with an organo-magnesium compound, there have been disclosed solid catalyst components consisting of a Grignard reagent and titanium tetrachloride or an alkoxy-containing titanium halide [see, for example, Japanese Patent Application Kokai (Laid-open) No. 4391/1971, Japanese Patent publication No. 40959/1972, Japanese Patent publication No. 39470/1975 and United States Patent No. 3 917 575], as well as solid catalyst components obtained by reacting a Grignard reagent with an alkoxy-containing titanium halide and then treating the resulting reaction product with titanium tetrachloride [see Japanese Patent Publication No. 24361/1972 and Japanese Patent Application Kokai (Laid-open) No. 115302/1971] as well as a solid state catalyst component containingh ydrocarbyloxy groupe obtained by reacting an alkoxy-containing titanium (III)-halide with an ether compound and titanium tetrachloride in a slurry state in the presence of a magnesium halide [EP-A-111 903]. However, these solid catalyst components are not satisfactory in catalytic activities per amount of transition metal and also per amount solid catalyst component.

It is an object of the present invention to provide

(1) a solid catalyst component having sufficiently high catalytic activities not only per amount of transition metal but also per amount solid catalyst component to make the removal of catalyst residues unnecessary;
(2) a catalyst system containing the solid catalyst component; and
(3) a process for producing olefin polymers using the catalyst system.

According to the present invention, there is provided a solid catalyst component (A) containing a trivalent titanium compound, obtained by the steps of reducing a titanium compound of the formula $Ti(OR^1)_nX_{4-n}$ (wherein $R^1$ is a $C_1$-$C_{20}$ hydrocarbyl group, X is a halogen atom and n is a number satisfying the relationship $O < n \leq 4$) with an organo-magnesium compound in the presence of an organo-silicon compound containing Si-O bonds; and then treating the resulting solid product with a mixture of an ether compound and titanium tetrachloride.

The invention further provides a catalyst system comprising the solid catalyst component (A) together with an organo-aluminium compound (B).

The invention also provides a process for homopolymerizing or copolymerizing olefins using the said catalyst system comprising solid catalyst component (A) and organo-aluminium compound (B).

The titanium compound used in the preparation of the catalyst component (A) in accordance with the present invention has the formula $Ti(OR^1)_nX_{4-n}$ (wherein $R^1$, X and n are as defined above). Specific examples of groups $R^1$ include alkyl groups, such as methyl, ethyl, n-propyl, isopropyl, n-butyl, isobutyl, n-amyl, isoamyl, n-hexyl, n-heptyl, n-octyl, n-decyl and n-dodecyl groups; aryl groups such as phenyl, cresyl, xylyl and naphthyl groups; cycloalkyl groups such as cyclohexyl and cyclopentyl groups: alkenyl groups such as propenyl groups: and aralkyl groups such as benzyl groups.

The group $R^1$ is preferably a $C_2$-$C_{18}$ alkyl group or a $C_4$-$C_{18}$ aryl group. A straight chain $C_2$-$C_{18}$ alkyl group is particularly preferred.

When n is two or more the groups $OR^1$ may be different.

The halogen atom represented by X, may, for example, be chlorine, bromine or iodine. Of these, chlorine gives the most desirable results.

The n of the general formula $Ti(OR^1)_nX_{4-n}$ is a number satisfying $O < n \leq 4$, preferably $2 \leq n \leq 4$, more preferably 4.

The titanium compound of the formula

$Ti(OR^1)_nX_{4-n}$ can be produced in accordance with known synthesis processes. For example, it can be produced by reacting a compound of the formula $Ti(OR^1)_4$ with a compound $TiX_4$ in appropriate proportions or by reacting a compound $TiX_4$ with an appropriate alcohol in appropriate proportions.

The reduction of the titanium compound is carried out in the presence of an organo-silicon compound having Si-O bonds, and suitable organo-silicon compounds are represented by the formulae:

$Si(OR^3)_mR^4_{4-m}$,

$R^5(R^6_2SiO)_pSiR^7_3$ or

$(R^8_2SiO)_q$

(wherein $R^3$ is a $C_1$-$C_{20}$ hydrocarbyl group; $R^4$, $R^5$, $R^6$, $R^7$ and $R^8$ are each a hydrogen atom or a $C_1$-$C_{20}$ hydrocarbyl group; m is a number satisfying the relationship $O < m \leq 4$; p is an integer of 1 to 1 000; and q is an integer of 2 to 1 000).

Specific examples of suitable organo-silicon compound include tetramethoxysilane, dimethyldimethoxysilane, tetraethoxysilane, triethoxyethylsilane, diethoxyethylsilane, ethoxytriethylsilane, tetraisopropoxysilane, diisopropoxydiisopropylsilane, tetrapropoxysilane, dipropoxydipropylsilane, tetra-n-butoxysilane, di-n-butoxy-di-n-butylsilane, dicyclopentoxydiethylsilane, diethoxydiphenylsilane, cyclohexyloxytrimethylsilane, phenoxytrimethylsilane, tetraphenoxysilane, triethoxyphenylsilane, hexamethyldisiloxane, hexaethyldisiloxane, hexapropyldisiloxane, octaethyltrisiloxane, dimethylpolysiloxane, diphenylpolysiloxane, methylhydropolysiloxane, and phenylhydropolysiloxane.

Preferable organo-silicon compounds are alkoxysilane compounds of the formula $Si(OR^3)_mR^4_{4-m}$ in which m is preferably from 1 to 4. A tetraalkoxysilane compound (m = 4) is particularly preferred.

The organo magnesium compound used in the present invention can be any organo magnesium compound as long as it has at least one Mg-C bond. Preferably there is used a Grignard compound of the formula $R^9MgX$ (wherein $R^9$ is a $C_1$-$C_{20}$ hydrocarbyl group and X is a halogen atom), or a dialkylmagnesium or diarylmagnesium compound of the formula $R^{10}R^{11}Mg$ (wherein $R^{10}$ and $R^{11}$ are each $C_1$-$C_{20}$ hydrocarbyl groups). The groups $R^9$, $R^{10}$ and $R^{11}$ can be same or different and are each an alkyl, aryl, aralkyl or alkenyl group containing up to 20 carbon atoms such as methyl, ethyl, n-propyl, isopropyl, n-butyl, sec.-butyl, tert.-butyl, n-amyl, isoamyl, n-hexyl, n-octyl, 2-ethylhexyl, phenyl or benzyl group.

Specific examples of Grignard compounds include methylmagnesium chloride, ethylmagnesium chloride, ethylmagnesium bromide, ethylmagnesium iodide. n-propylmagnesium chloride, n-propylmagnesium bromide, n-butylmagnesium chloride, n-butylmagnesium bromide, sec.-butylmagnesium chloride, sec.-butylmagnesium bromide, tert.-butylmagnesium chloride, tert.-butylmagnesium bromide, n-amylmagnesium chloride, isoamylmagnesium chloride, phenylmagnesium chloride and phenylmagnesium bromide. Specific examples of compounds of formula $R^{10}R^{11}Mg$ include diethylmagnesium, di-n-propylmagnesium, diisopropylmagnesium, di-n-butylmagnesium, di-sec.-butylmagnesium, di-tert.-butylmagnesium, n-butylsec.-butylmagnesium, di-n-amylmagnesium and diphenylmagnesium.

As the synthesis solvent for the organo-magnesium compound, there can be used an ether solvent such as diethyl ether, di-n-propyl ether, diisopropyl ether, di-n-butyl ether, diisobutyl ether, di-n-amyl ether, diisoamyl ether, di-n-hexyl ether, di-n-octyl ether, diphenyl ether, dibenzyl ether, phenetol anisole, tetrahydrofuran or tetrahydropyran. Alternatively, there can be used a hydrocarbon solvent such as hexane, heptane, octane, cyclohexane, methylcyclohexane, benzene, toluene or xylene; or a mixed solvent comprising an ether solvent and a hydrocarbon solvent. The organo-magnesium compound is preferably used in the form of an ethereal solution. The ether in this case is an ether compound having at least 6 carbon atoms within the molecule or having a cyclic structure.

The use of a Grignard compound $R^9MgCl$ in the form of an etheral solution is particularly preferred from the point of catalyst potency.

The organo-magnesium compound can also be used in the form of a hydrocarbon-soluble complex between said compound and an organometallic compound capable of rendering the organo magnesium compound soluble in hydrocarbons. Examples of suitable organo-metallic compound include organic compounds of Li, Be, B, Al or Zn.

The ether compound used to treat the reduced titanium compound of the present invention is preferably a dialkyl ether such as diethyl ether, di-n-propyl ether, diisopropyl ether, di-n-butyl ether, di-n-amyl ether, diisoamyl ether, dineopentyl ether, di-n-hexyl ether, di-n-octyl ether, methyl n-butyl ether, methyl isoamyl ether or ethyl isobutyl ether. Of these, di-n-butyl ether and diisoamyl ether are particularly preferred.

The solid catalyst component (A) of the present invention can be synthesized by reducing the titanium compound $Ti(OR^1)_nX_{4-n}$ with an organo-magnesium compound in the presence of an organo-silicon compound having Si-O bonds and then treating the resulting solid product with a mixture of an ether compound and titanium tetrachloride.

All the steps of the synthesis reaction are conducted in an inert gas atmosphere such as nitrogen or argon.

In the reduction of the titanium compound with the organo-magnesium compound, the organo-magnesium compound is added to the titanium compound, optionally in admixture with the organo-silicon compound. Alternatively, the mixture of

the titanium compound and the organo-silicon compound may be added to a solution of organo-magnesium compound. From the point of view of catalytic activity, a process comprising adding an organo-magnesium compound to a mixture of a titanium compound and an organo-silicon compound is preferred.

Preferably, the titanium compound and the organo silicon compound are used after having been dissolved in or diluted by an appropriate solvent. Suitable such solvents include aliphatic hydrocarbons such as hexane, heptane, octane and decane; aromatic hydrocarbons such as toluene, xylene and decalin; alicyclic hydrocarbons such as cyclohexane and methylcyclohexane; and ether compounds such as diethyl ether, dibutyl ether, diisoamyl ether and tetrahydrofuran.

The reduction temperature is generally -50° to 70°C. preferably -30° to 50°C, and particularly preferably -25° to 35°C. If the reduction temperature is too high. the catalytic activity is reduced.

The addition time has no particular restrictions but ordinarily is 30 minutes to about 6 hours. After the completion of the reduction, a post-reaction may be conducted at a temperature of 20° to 120°C.

The amount of the organo-silicon compound used is suitably up to 50, preferably 1 to 30, particularly preferably 3 to 25, in terms of the atomic ratio of silicon atoms to titanium atoms in the organo-silicon compound the titanium compound (the Si/Ti ratios).

The amount of the organo-magnesium compound used is suitably 0.1 to 10, preferably 0.2 to 5.0, particularly preferably 0.5 to 2.0, in terms of the ratio (Ti + Si)/Mg, namely the atomic ratio of the sum of the titanium and silicon atoms to the magnesium atoms.

The solid product obtained by the reduction is subjected to solid-liquid separation and then washed several times with an inert hydrocarbon solvent such as hexane or heptane.

The solid product thus obtained contains trivalent titanium, magnesium and hydrocarbyloxy groups and is generally amorphous or very slightly crystalline. Preferably, it has an amorphous structure from the standpoint of catalyst potency.

The solid product is then treated with a mixture of an ether compound and titanium tetrachloride.

The treatment of the solid product with a mixture of the ether compound and titanium tetrachloride is preferably conducted in a slurry state. Suitable solvents for slurrying include aliphatic hydrocarbons such as pentane, hexane, heptane, octane and decane; aromatic hydrocarbons such as toluene, xylene and decalin; alicyclic hydrocarbons such as cyclohexane and methylcyclohexane and the like; and halogenated hydrocarbons such as dichloroethane, trichloroethane, trichloroethylene, monochlorobenzene, dichlorobenzene and trichlorobenzene.

The slurry concentration is preferably from 0.05 to 0.5 g solid/ml solvent, particularly preferably 0.2 to 0.3 g solid/ml solvent.

The reaction temperature is suitable 30° to 150°C, preferably 45° to 120°C, particularly preferably 60° to 100°C.

The reaction time has no particular restriction but ordinarily is from 30 minutes to 6 hours.

With respect to the addition order of the solid product, the ether compound and titanium tetrachloride, the ether compound and titanium tetrachloride can be added to the solid product, or the solid product can be added to a solution containing both the ether compound and titanium tetrachloride.

When the ether compound and titanium tetrachloride are added to the solid product, it is preferable that the ether compound and titanium tetrachloride be added separately in that order or simultaneously.

The amount of the ether compound used is suitably 0.1 to 100 moles, preferably 0.5 to 50 moles, particularly preferably 1 to 20 moles, per mole of titanium atoms in the solid product.

The amount of titanium tetrachloride added is suitably 1 to 1 000 moles, preferably 10 to 300 moles, per mole of titanium atoms in the solid product. The amount of titanium tetrachloride added is also suitable 1 to 100 moles, preferably 1.5 to 75 moles, particularly preferably 2 to 50 moles, per mole of the ether compound.

The thus obtained solid catalyst component containing a trivalent titanium compound is subjected to solid-liquid separation. The resulting solid is washed several times with an inert hydrocarbon solvent such as hexane or heptane and then is used for polymerization of olefins.

The solid obtained from the solid-liquid separation step may be washed with an excessive amount of a halogenated hydrocarbon solvent (e. g. monochlorobenzene) at least one time at a temperature of 50° to 120°C, followed by several times of washing with an aliphatic hydrocarbon solvent (e. g. hexane) and then be used for olefin polymerization.

The organo-aluminium compound (B) used in combination with the solid catalyst component (A) in the present invention has at least one Al-C bond in the molecule. Typical organo-aluminium compounds are those of the formulae:

$R^{12}{}_{Y}AlY_{3-Y}$ or

$R^{13}R^{14}Al\text{-}O\text{-}AlR^{15}R^{16}$

(wherein $R^{12}$, $R^{13}$, $R^{14}$, $R^{15}$ and $R^{16}$ are each a $C_1$-$C_8$ hydrocarbyl group; Y is a halogen atom, a hydrogen atom or an alkoxy group; and Y is a number satisfying the relationship ($2 \leq Y \leq 3$).

Specific examples of organo-aluminium compounds include trialkylaluminiums such as triethylaluminium, triisobutylaluminium and trihexylaluminium;

dialkylaluminium hydrides such as diethylaluminium hydride and diisobutylaluminium hydride;

dialkylaluminium halides such as diethylaluminium chloride; mixtures of a trialkylaluminium and

a dialkylaluminium halide; and alkyl alumoxanes such as tetraethyl dialumoxane and tetrabutyl dialumoxane.

Preferred organo-aluminium compounds are trialkylaluminiums, mixtures of a trialkylaluminium and a dialkylaluminium halide, and alkyl alumoxanes. Particularly preferred are triethylaluminium, triisobutylaluminium, a mixture of triethylaluminium and diethylaluminium chloride, and tetraethyl dialumoxane.

The amount of organo-aluminium compound used can range as widely as 1 to 1 000 moles per mole of titanium atoms in the solid catalyst. The amount is preferably from 5 to 600 moles.

In the polymerization of olefins using the catalyst system of the invention may be fed to the polymerization reactor with no particular restriction except that they should be fed in an inert gas such as nitrogen or argon which is free from moisture.

The catalyst components (A) and (B) can be fed separately or can be contacted with each other in advance before feeding to the reactor.

The polymerization can be carried out at temperatures between -30°C and 200°C.

The polymerization pressure has no particular restriction but desirably is from $3.03 \times 10^5$ to $1.01 \times 10^7$ Pa (3 to 100 atm.) from industrial and economical standpoints. The polymerization can be carried out as a continuous or a batch method. The polymerization can be carried out as a slurry polymerization process employing an inert hydrocarbon solvent, such as propane, butane, pentane, hexane, heptane or octane, or as a liquid phase or gas phase polymerization process employing no solvent.

Specific examples of olefins which may be polymerized include ethylene, propylene, butene-1, pentene-1, hexene-1, 3-methylpentene-1 and 4-methylpentene-1. Needless to say, other olefins can be used in the present invention. The polymerization according to the present invention can be a homopolymerization or a copolymerization. In copolymerization, a mixture of two or more different olefins is contacted with the present catalyst system, whereby a copolymer is produced.

Heteroblock copolymerization wherein polymerization is conducted in two or more stages can also be easily conducted with the present catalyst system.

It is also possible to add a chain transfer agent such as hydrogen to the polymerization system in oder to control the molecular weight of the polymer obtain.

It is further possible to add a known electron-donating compound to the polymerization system in order to improve the stereoregularity and molecular weight of the polymer obtained. Typical examples of such electron-donating compounds are organic carboxylic acid esters such as methyl methacrylate are methyl toluate the like; phosphorous acid esters such as triphenylphosphite; and silicic acid esters such as tetraethoxysilane and phenyltriethoxysilane.

In order that the invention may be well understood the following examples are given by way of illustration only.

**Example 1**

**(a) Synthesis of organomagnesium compound**

A 1 litre flask, equipped with a stirrer, a reflux condenser, a dropping funnel and a thermometer, was purged with argon. 32. 0 g of chipped magnesium for Grignard reagent was placed therein. 120 g of n-butyl chloride and 500 ml of di-n-butyl ether were placed in the dropping funnel and about 30 ml of the resulting mixture was dropped into the flask to start reaction with the magnesium. Addition of the mixture was continued at 50°C for 4 hours from the start of the reaction. After the termination of the addition, the reaction was continued for a further 1 hour at 60°C. Then, the reaction mixture was cooled to room temperature and the solid portion was removed by filtration.

N-butylmagnesium chloride present in di-n-butyl ether was hydrolyzed with 1 N sulphuric acid and back-titrated with a 1 N aqueous sodium hydroxide solution, using phenolphthalein as an indicator, to determine the concentration of n-butylmagnesium chloride. The concentration was 2.03 moles per litre.

**(b) Synthesis of solid product**

A 500 ml flask, equipped with a stirrer and a dropping funnel, was purged with argon. 300 ml of n-heptane, 31 g of tetrabutoxytitanium and 18 g of ethyl orthosilicate were placed in the flask and made into a uniform solution. Then, 100 ml of the organo-magnesium compound prepared in (a) above, placed in the dropping funnel of the flask, was slowly dropped into the flask over 2 hours while keeping the temperature inside the flask at 5°C, to effect a reduction reaction. After the termination of the dropping, stirring was continued for a further 1 hour at room temperature, after which the reaction mixture was allowed to stand at room temperature to conduct solid-liquid separation. The solid was washed three times with 300 ml of n-heptane and then dried under vacuum to obtain a grayish brown solid product.

**(c) Synthesis of solid catalyst component containing tri-valent titanium compound**

A 100 ml flask having an internal volume of 100 ml was purged with argon. 11.3 g of the solid product prepared in (b) above and 56 ml of n-heptane were placed in the flask. The temperature of the flask was kept at 80°C. 7.6 ml of di-n-butyl ether and 29 ml of titanium tetrachloride were added to the flask and reaction was conducted at 80°C for 1 hour.

The reaction mixture was allowed to stand at

room temperature for solid-liquid separation. The solid was washed four times with 50 ml of n-heptane and dried under vacuum to obtain a solid catalyst component of violet colour.

1 g of this solid catalyst component contained 2.6 mM of titanium. 5.5 mM of magnesium 0.27 mM of ethoxy groups, 0.32 mM of butoxy groups and 0.69 mM of butyl ether.

**(d) Polymerization of ethylene**

A 0.4 litre autoclave, equipped with a stirrer, was thoroughly purged with argon. 250 ml of n-heptane were placed in the auto-clave which was then heated to 180°C and ethylene was then added until the total pressure inside the autoclave was 12.2 x $10^5$ Pa (12.5 kg/$cm^2$). Further, 20 mg of the solid catalyst component prepared in (c) above and 1 mN of triethylaluminium were added to start a polymerization. The polymerization was conducted for 5 minutes at 180°C while continuously feeding ethylene to keep the total pressure at the above level. After completion of the polymerization, the reaction mixture was filtered to separate the polymer formed. The polymer was dried at 60°C under vacuum and 14.4 g of the polymer was obtained. The catalytic activities of the catalyst used were 719 g.polymer/g.solid catalyst and 5.750 g.polymer/g. titanium.

**Comparative Example 1**

A solid catalyst component was synthesized following the procedure described in Example 1 except that the di-n-butyl ether used in step (C) (synthesis of solid catalyst component) was not used. 1 g of the resultant solid catalyst component contained 3.2 mM of titanium, 3.9 mM of magnesium, 0.82 mM of ethoxy groups and 0.75 mM of butoxy groups.

Using the above solid catalyst, ethylene was polymerized following the procedure of Example 1(d). The catalytic activities of the catalyst used were 250 g.polymer/g. solid catalyst and 1 600 g.polymer/g.titanium.

**Example 2**

**(a) Synthesis of solid product**

A 500 ml flask equipped with a stirrer and a dropping funnel, was purged with argon. 23 g of tetrabutoxytitanium, 52 g of ethyl orthosilicate and 310 ml of heptane were placed in the flask and made into a uniform solution. 150 ml of the organo-magnesium compound prepared in Example 1(a), placed in the dropping funnel of the flask, was slowly dropped into the flask over 2 hours while keeping the temperature inside the flask at 5°C. to effect a reduction reaction. After completion of the dropping, stirring was continued for further 1 hour at room temperature. The reaction mixture was allowed to stand at room temperature for solid-liquid separation. The solid was washed three times with 300 ml of n-heptane and dried under vacuum to give a grayish brown solid product.

1 g of this solid product contained 0.77 mM of tri-valent titanium, 6.2 mM of magnesium, 7.0 mM of ethoxy groups and 1.9 mM of butoxy groups.

**(b) Synthesis of solid catalyst component**

A 100 ml flask was purged with argon. 7.1 g of the solid product prepared in (a) above and 30 ml of n-heptane were placed in the flask. The temperature inside the flask was kept at 80°C. Then, 2.8 ml of di-n-butyl ether and 19 ml of titanium tetrachloride were added to the flask reaction was conducted at 80°C for 1 hour. The reaction mixture was allowed to stand at room temperature for solid-liquid separation. The solid was washed four times with 80 ml of n-heptane and dried under vacuum to give a solid catalyst component of violet colour.

1 g of this solid catalyst contained 2.7 mM of titanium, 5.1 mM of magnesium, 0.5 mM of ethoxy groups and 0.19 mM of butoxy groups.

**(c) Polymerization of ethylene**

Ethylene polymerization was conducted following the procedure of Example 1(d) except that the solid catalyst component prepared in (b) above was used. The catalytic activities of the catalyst used were 563 g.polymer/g.solid catalyst and 4 330 g.polymer/g.titanium.

**Example 3**

A solid catalyst component was synthesized by the same procedure as in Example 2(b) except that the amount of titanium tetrachloride used was changed to 37 ml. 1 g of the resultant solid catalyst component contained 2.7 mM of titanium, 5.4 mM of magnesium, 0.43 mM of ethoxy groups and 0.16 mM of butoxy groups. Using this solid catalyst component, ethylene polymerization was conducted as described in Example 1(d). The catalytic activities of the catalyst used were 760 g polymer/g.solid catalyst and 5 890 g.polymer/g.titanium.

**Example 4**

A solid catalyst component was synthesized by the procedure of Example 2(b) except that the amount of titanium tetrachloride used was changed to 55 ml. 1 g of the resultant solid catalyst component contained 1.8 mM of titanium, 61 mM of magnesium, 0.46 mM of ethoxy groups and 0.27 mM of butoxy groups.

Using the above solid catalyst component,

ethylene polymerization was conducted by the same procedure of Example 1(d). The catalytic activities of the catalyst used were 781 g.polymer/g.solid catalyst and 9 170 g.polymer/g.titanium.

**Example 5**

A solid catalyst component was synthesized by the procedure of Example 2(b) except that the amount of di-n-butyl ether used was changed to 1.4 ml. 1 g of the resultant solid catalyst component contained 2.9 mM of titanium. 5.4 mM of magnesium, 0.61 mM of ethoxy groups and 0.17 mM of butoxy groups.

Using the above catalyst component, ethylene polymerization was conducted as in Example 1(d). The catalytic activities of the catalyst used were 490 g.polymer/g.solid catalyst and 3 520 g.polymer/g.titanium.

**Example 6**

A solid catalyst component was synthesized by the procedure of Example 2(b) except that the amount of di-n-butyl ether was changed to 11 ml. 1 g of the resultant solid catalyst component contained 1.4 mM of titanium, 6.2 mM of magnesium, 0.16 mM of ethoxy groups and 0.25 mM of butoxy groups.

Using this catalyst component, ethylene polymerization was conducted as in Example 1(d). The catalytic activities of the catalyst used were 854 g.polymer/g. solid catalyst and 12 700 g./polymer/g.titanium.

**Example 7**

A solid catalyst component was synthesized by the procedure of Example 2(b) except that the amount of di-n-butyl ether used was changed to 21 ml. 1 g of the resultant solid catalyst component contained 0.75 mM of titanium, 8.4 mM of magnesium. 0.08 mM of ethoxy groups and 0.06 mM or butoxy groups.

Using this catalyst component, ethylene polymerization was conducted as in Example 1(d). The catalytic activities of the catalyst used were 313 g.polymer/g.solid catalyst and 8 650 g.polymer/g.titanium.

**Example 8**

**(a) Polymerization of ethylene**

A 0.4 litre autoclave, equipped with a stirrer, was purged thoroughly with argon. 200 ml of n-heptane and 5 g of butene-1 were placed in the autoclave, the temperature which was then fed thereinto until the total pressure inside the autoclave was 3.0 x $10^5$ Pa (3.1 kg/$cm^2$). 2 mg of the solid catalyst component prepared in Example 1 and 1 mM of triethylaluminium were added to the autoclave after which a polymerization was started. The polymerization was conducted at 50°C for 1 hour while continuously feeding ethylene to keep the total pressure at the above mentioned level. After completion of the polymerization, the reaction mixture was filtered to separate the polymer formed. The polymer was dried at 60°C under vacuum. The catalytic activities of the catalyst used were 24 200 g.polymer/g.solid catalyst and 164 000 g.polymer/g.titanium.

**Comparative Example 2**

Ethylene polymerization was conducted as in Example 8 except that the solid catalyst prepared in comparative Example 1 was used. The catalytic activities of the catalyst used were, in this case. 18 600 g.polymer/g. solid catalyst and 121 000 g.polymer/g.titanium.

**Example 9**

**Polymerization of propylene**

A 130 ml stainless steel autoclave of the magnetic stirring type, was purged with argon. 0.57 mM of triethylaluminium, 0 057 mM of ethyl phenylsilicate, 10 mg of the solid catalyst component prepared in Example 1 and 80 ml of liquified propylene were placed in the autoclave.

The contents of the autoclave were kept at 60°C for 1 hour with stirring. Excessive propylene was released. The polypropylene formed was air-dried for 24 hours. The catalytic activity of the catalyst used was 1 500 g.polymer/g.solid catalyst.

The percentage of insolubles when the polypropylene powder obtained was subjected to 6 hours extraction with boiling n-heptane (hereinafter this percentage is referred to as "IY") was 81.9 %.

**Comparative Example 3**

Propylene polymerization was conducted as in Example 12 except that the solid catalyst component of Comparative Example 1 was used. The catalytic activity of the catalyst used was 710 g.polymer/g.solid catalyst. IY was 73.6 %.

As may be appreciated from the above, the catalyst system of the present invention has very high catalytic activities not only per amount of solid catalyst but also per amount of titanium atoms. Hence, polymers produced with said catalyst system, without employing any special procedure for catalyst residue removal, have very low halogen atom and titanium atom contents which greatly affect the colouring, stability and corrosiveness of polymers. This requires no facility for catalyst residue removal and can reduce the production cost of olefin polymers.

**Claims**

1. A solid catalyst component for olefin polymerization containing a tri-valent titanium compound, characterized in that it is obtained by reducing a titanium compound of the formula $Ti(OR^1)_nX_{4}$-n (wherein $R^1$ is a $C_1$ -$C_{20}$ hydrocarbyl group, X is a halogen atom and n is a number satisfying the relationship $0 < n \leq 4$) with an organo-magnesium compound in the presence of an organo silicon compound having Si-O bonds and then treating the resulting solid product with a mixture of an ether compound and titanium tetrachloride.

2. A solid catalyst component as claimed in claim 1 characterized in that n is a number satisfying the relationship 2 n 4.

3. A solid catalyst component as claimed in any one of the preceding claims characterized in that X is chlorine.

4. A solid catalyst component as claimed in any one of the preceding claims characterized in that the group(s) $R^1$ are $C_2$-$C_{18}$ alkyl groups and/or $C_6$-$C_{18}$ aryl groups.

5. A solid catalyst component as claimed in claim 1 characterized in that the organo silicon compound has the formula:

$Si(OR^3)_mR^4{}_{4-m}$,

$R^5(R^6{}_2SiO)_pSiR^7{}_3$ or

$(R^8{}_2SiO)_q$

(wherein $R^3$ is a $C_1$-$C_{20}$ hydrocarbyl group; $R^4$, $R^5$, $6^6$, $R^7$ and $R^8$ are each a $C_1$-$C_{20}$ hydrocarbyl group or a hydrogen atom; m is a number satisfying the relationship $0 < m \leq 4$; p is an integer of 1 to 1 000; and q is an integer of 2 to 1 000).

6. A solid catalyst component as claimed in claim 5 characterized in that the organo silicon compound is an alkoxysilane compound of the formula:

$Si(OR^3)_mR^4{}_{4-m}$,

in which m is a number satisfying the relationship 1 m 4.

7. A solid catalyst component as claimed in any one of the preceding claims characterized in that the organo magnesium compound is a Grignard compound of the formula $R^9MgX$ (wherein $R^9$ is a hydrocarbon group having 1 to 20 carbon atoms and X is a halogen atom), or a dialkyl or diaryl magnesium compound of the formula $R^{10}R^{11}Mg$ (wherein $R^{10}$ and $R^{11}$ are each a $C_1$-$C_{20}$ hydrocarbyl group).

8. A solid catalyst component as claimed in any one of the preceding claims characterized in that the ether compound is a dialkyl ether.

9. A solid catalyst component as claimed in claim 1 characterized in that the atomic ratio of silicon atoms in the organo-silicon compound to titanium atom in titanium compound is from 1 : 1 to 30 : 1.

10. A solid catalyst component as claimed in any one of the preceding claims characterized in that the atomic ratio of the total of titanium atoms and silicon atoms, when present, to magnesium atoms in the organo-magnesium compound is from 0.1 : 1 to 10 : 1.

11. A solid catalyst component as claimed in any one of the preceding claims characterized in that the reduction is conducted at a temperature of -50° to 70°C.

12. A solid catalyst component as claimed in any one of the preceding claims characterized in that the ether compound is used in an amount of 0.1 to 100 moles per mole of titanium atoms in the solid product.

13. A solid catalyst component as claimed in any one of the preceding claims characterized in that the titanium tetrachloride is used is an amount of 1 to 1 000 moles per mole of titanium atoms in the solid product and in an amount of 1 to 100 moles per mole of the ether compound.

14. A solid catalyst component as claimed in any one of the preceding claims characterized in that the solid product is treated with a mixture of ether compound and titanium tetrachloride in a slurry in the presence of hydrocarbon solvent.

15. A solid catalyst component as claimed in claim 14 characterized in that the hydrocarbon solvent is an aromatic hydrocarbon solvent or a halogenated hydrocarbon solvent.

16. A catalyst system for olefin polymerization comprising:

(A) a solid catalyst component as claimed in any one of the preceding claims, and
(B) an organo-aluminium compound.

17. A catalyst system as claimed in claim 16 characterized in that the organo-aluminium compound (3) is a compound having at least one Al-C bond within the molecule and represent by the formula:

$R^{12}{}_YAlY_{3-Y}$ or

$R^{13}R^{14}Al$-O-$AlR^{15}R^{16}$

(wherein $R^{12}$, $R^{13}$, $R^{14}$, $R^{15}$ and $R^{16}$ are each a $C_1$ -$C_8$ hydrocarbyl groups; Y is a halogen atom, a hydrogen atom or an alkoxy group; and Y is a number satisfying the relationship 2 Y 3).

18. A catalyst system as claimed in claim 17 characterized in that the organo-aluminium compound is a trialkylaluminium, a mixture of a trialkylaluminium and a dialkylaluminium halide, or an alkyl alumoxane.

19. A process for producing olefin polymers which comprises homopolymerizing or copolymerizing olefins in the presence of a catalyst system as claimed in any one of claims 16 - 18.

## Patentansprüche

1. Feste Katalysatorkomponente zur Olefinpolymerisation, enthaltend eine dreiwertige Titanverbindung, dadurch gekennzeichnet, daß sie durch Reduktion einer Titanverbindung der Formel $Ti(OR^1)_nX_{4\text{-}n}$ (in der $R^1$ einen $C_1$-$C_{20}$-Kohlenwasserstoffrest bedeutet, X ein Halogenatom darstellt und n eine Zahl ist, die die Beziehung $0 < n \leq 4$ erfüllt) mit einer Organomagnesiumverbindung in Gegenwart einer Organosiliciumverbindung mit SiO-Bindungen und dann Behandlung des erhaltenen festen Produktes mit einem Gemisch aus einer Ätherverbindung und Titantetrachlorid erhalten worden ist.

2. Feste Katalysatorkomponente nach Anspruch 1 dadurch gekennzeichnet, daß n eine Zahl ist, die die Beziehung $2 \leq n \leq 4$ erfüllt.

3. Feste Katalysatorkomponente nach einem der vorangehenden Ansprüche, dadurch gekennzeichnet, daß X ein Chloratom ist.

4. Feste Katalysatorkomponente nach einem der vorangehenden Ansprüche, dadurch gekennzeichnet, daß die Gruppe(n) $R^1$ $C_2$-$C_{18}$ -Alkylreste und/oder $C_6$-$C_{18}$-Arylreste bedeuten.

5. Feste Katalysatorkomponente nach Anspruch 1 dadurch gekennzeichnet, daß die Organosiliciumverbindung die Formel

$Si(OR^3)_mR^4_{4\text{-}m}$,

$R^5(R^6_2SiO)_pSiR^7_3$ oder

$(R^8_2SiO)_q$

aufweist (wobei $R^3$ einen $C_1$-$C_{20}$-Kohlenwasserstoffrest bedeutet, $R^4$, $R^5$, $R^6$, $R^7$ und $R^8$ jeweils einen $C_1$-$C_{20}$-Kohlenwasserstoffrest oder ein Wasserstoffatom darstellen, m eine Zahl ist, die die Beziehung $0 < m \leq 4$ erfüllt; p eine ganze Zahl von 1 bis 1000 ist und q eine ganze Zahl von 2 bis 1000 ist).

6. Feste Katalysatorkomponente nach Anspruch 5, dadurch gekennzeichnet, daß die Organosiliciumverbindung eine Alkoxysilanverbindung der Formel



$Si(OR^3)_mR^4_{4\text{-}m}$

ist, in der m eine Zahl ist, die die Beziehung $1 \leq m \leq 4$ erfüllt.

7. Feste Katalysatorkomponente nach einem der vorangehenden Ansprüche, dadurch gekennzeichnet, daß die Organomagnesiumverbindung eine Grignard-Verbindung der Formel $R^9MgX$ (in der $R^9$ einen Kohlenwasserstoffrest mit 1 bis 20 Kohlenstoffatomen bedeutet und X ein Halogenatom ist) oder eine Dialkyl- oder Diaryl-Magnesiumverbindung der Formel $R^{10}R^{11}Mg$ (in der $R^{10}$und $R^{11}$ jeweils einen $C_1$-$C_{20}$-Kohlenwasserstoffrest bedeuten) darstellt.

8. Feste Katalysatorkomponente nach einem der vorangehenden Ansprüche, dadurch gekennzeichnet, daß die Ätherverbindung ein Dialkyläther ist.

9. Feste Katalysatorkomponente nach Anspruch 1, dadurch gekennzeichnet, daß das Atomverhältnis von Siliciumatomen in der Organosiliciumverbindung zu Titanatomen in der Titanverbindung 1 : 1 bis 30 : 1 beträgt.

10. Feste Katalysatorkomponente nach einem der vorangehenden Ansprüche, dadurch gekennzeichnet, daß das Atomverhältnis der gesamten Titanatome und Siliciumatome, wenn vorhanden, zu Magnesiumatomen in der Organomagnesiumverbindung 0,1 : 1 bis 10 : 1 beträgt.

11. Feste Katalysatorkomponente nach einem der vorangehenden Ansprüche, dadurch gekennzeichnet, daß die Reduktion bei einer Temperatur von -50 bis +70°C durchgeführt wird.

12. Feste Katalysatorkomponente nach einem der vorangehenden Ansprüche, dadurch gekennzeichnet, daß die Ätherverbindung in einer Menge von 0,1 bis 100 Mol pro Mol Titanatome in dem festen Produkt eingesetzt wird.

13. Feste Katalysatorkomponente nach einem der vorangehenden Ansprüche, dadurch gekennzeichnet, daß das Titantetrachlorid in einer Menge von 1 bis 1000 Mol pro Mol Titanatome in dem festen Produkt und in einer Menge von 1 bis 100 Mol pro Mol der Ätherverbindung eingesetzt wird.

14. Feste Katalysatorkomponente nach einem der vorangehenden Ansprüche, dadurch gekennzeichnet, daß das feste Produkt in einem Gemisch von Ätherverbindung und Titantetrachlorid in einer Aufschlämmung in Gegenwart eines Kohlenwasserstoff-Lösungsmittels behandelt wird.

15. Feste Katalysatorkomponente nach Anspruch 14, dadurch gekennzeichnet, daß das Kohlenwasserstoff-Lösungsmittel ein aromatisches Kohlenwasserstoff-Lösungsmittel oder ein

halogeniertes Kohlenwasserstoff-Lösungsmittel ist.

16. Katalysatorsystem zur Olefinpolymerisation, umfassend:

(A) eine feste Katalysatorkomponente nach einem der vorangehenden Ansprüche, und
(B) eine Organoaluminiumverbindung.

17. Katalysatorsystem nach Anspruch 16, dadurch gekennzeichnet, daß die Organoaluminiumverbindung (B) eine Verbindung ist, die mindestens eine Al-C-Bindung innerhalb des Moleküls aufweist und durch die Formel

$R^{12}{}_Y AlY_{3-Y}$ oder

$R^{13}R^{14}Al\text{-}O\text{-}AlR^{15}R^{16}$

wiedergegeben wird (wobei $R^{12}$, $R^{13}$, $R^{14}$, $R^{15}$ und $R^{16}$ jeweils einen $C_1$-$C_8$-Kohlenwasserstoffrest bedeuten; Y ein Halogenatom, ein Wasserstoffatom und einen Alkoxyrest darstellt; und Y eine Zahl ist, die der Beziehung $2 \leq Y \leq 3$ genügt).

18. Katalysatorsystem nach Anspruch 17, dadurch gekennzeichnet, daß die Organoaluminiumverbindung ein Trialkylaluminium, ein Gemisch aus einem Trialkylaluminium und einem Dialkylaluminiumhalogenid oder ein Alkylalumoxan ist.

19. Verfahren zur Herstellung von Olefinpolymerisaten, umfassend die Homopolymerisation oder Copolymerisation von Olefinen in Gegenwart eines Katalysatorsystems nach einem der Ansprüche 16 bis 18.

**Revendications**

1. Composant de catalyseur solide pour la polymérisation d'oléfines, contenant un composé de titane trivalent, caractérisé en ce qu'il est obtenu par réduction d'un composé du titane de formule $Ti(OR^1)_nX_{4-n}$ (dans laquelle $R^1$ est un groupement hydrocarbyle en $C_1$-$C_{20}$, X est un atome d'halogène et n est un nombre satisfaisant à la relation $0 < n \leq 4$) par un composé organomagnésien en présence d'un composé organosilicique comportant des liaisons Si-O, puis par traitement du produit solide obtenu par un mélange d'un éther et de tétrachlorure de titane.

2. Composant de catalyseur solide selon la revendication 1, caractérisé en ce que n est un nombre satisfaisant à la relation $2 \leq n \leq 4$.

3. Composant de catalyseur solide selon la revendication 1 ou 2, caractérisé en ce que X est un atome de chlore.

4. Composant de catalyseur solide selon l'une quelconque des revendications 1 à 3, caractérisé en ce que le ou les groupements $R^1$ sont des groupements alkyle en $C_2$-$C_{18}$ et/ou des groupements aryle en $C_6$-$C_{18}$.

5. Composant de catalyseur solide selon la revendication 1, caractérisé en ce que le composé organosilicique répond à la formule

$Si(OR^3)_mR^4{}_{4-m}$,

$R^5(R^6{}_2SiO)_pSiR^7{}_3$ ou

$(R^8{}_2SiO)_q$

(dans laquelle $R^3$ est un groupement hydrocarbyle en $C_1$-$C_{20}$; $R^4$, $R^5$, $R^6$, $R^7$ et $R^8$ sont chacun un groupement hydrocarbyle en $C_1$-$C_{20}$ ou un atome d'hydrogène; m est un nombre satisfaisant à la relation $0 < m \leq 4$; p est un nombre entier de 1 à 1000; et q est un nombre entier de 2 à 1000).

6. Composant de catalyseur solide selon la revendication 5, caractérisé en ce que le composé organosilicique est un alcoxysilane de formule

$Si(OR^3)_mR^4{}_{4-m}$,

dans laquelle m est un nombre satisfaisant à la relation $1 \leq m \leq 4$.

7. Composant de catalyseur solide selon l'une quelconque des revendications 1 à 6, caractérisé en ce que le composé organomagnésien est un composé de Grignard de formule $R^9MgX$ (dans laquelle $R^9$ est un groupement hydrocarboné comportant 1 à 20 atomes de carbone et X est un atome d'halogène) ou un composé dialkyl- ou diarylmagnésium de formule $R^{10}R^{11}Mg$ (dans laquelle $R^{10}$ et $R^{11}$ sont chacun un groupement hydrocarbyle en $C_1$-$C_{20}$).

8. Composant de catalyseur solide selon l'une quelconque des revendications 1 à 7, caractérisé en ce que l'éther est un dialkyléther.

9. Composant de catalyseur solide selon la revendication 1, caractérisé en ce que le rapport atomique des atomes de silicium dans le composé organosilicique aux atomes de titane dans le composé du titane se situe entre 1 : 1 et 30 : 1.

10. Composant de catalyseur solide selon l'une quelconque des revendications 1 à 9, caractérisé en ce que le rapport du total des atomes de titane et des atomes de silicium, lorsqu'ils sont présents, aux atomes de magnésium dans le composé organomagnésien se situe entre 0,1 : 1 et 10 : 1.

11. Composant de catalyseur solide selon l'une quelconque des revendications 1 à 10, caractérisé en ce que la réduction est conduite à une température de -50 ° à 70 °C.

12. Composant de catalyseur solide selon l'une quelconque des revendications 1 à 11, caractérisé en ce que l'éther est utilisé dans une proportion de 0.1 à 100 moles par mole d'atomes de titane dans le produit solide.

13. Composant de catalyseur solide selon l'une quelconque des revendications 1 à 12, caractérisé en ce que le tétrachlorure de titane est utilisé dans une proportion de 1 à 1000 moles par mole d'atomes de titane dans le produit solide et dans une proportion de 1 à 100 moles par mole de l'éther.

14. Composant de catalyseur solide selon l'une quelconque des revendications 1 à 13, caractérisé en ce que le produit solide est traité par un mélange d'éther et de tétrachlorure de titane, en suspension en présence d'un solvant hydrocarboné.

15. Composant de catalyseur solide selon la revendication 14, caractérisé en ce que le solvant hydrocarboné est un solvant hydrocarboné aromatique ou un solvant hydrocarboné halogène.

16. Système catalyseur pour la polymérisation d'oléfines, comprenant:

(A) un composant de catalyseur solide selon l'une quelconque des revendications 1 à 15, et
(B) un composé organo-aluminique.

17. Système catalyseur selon la revendication 16, caractérisé en ce que le composé organo-aluminique (B) la molécule et représenté par la formule

$R^{12}YAlY_{3-Y}$ ou

$R^{13}R^{14}Al\text{-}O\text{-}AlR^{15}R^{16}$

(dans laquelle $R^{12}$, $R^{13}$, $R^{14}$, $R^{15}$ et $R^{16}$ sont chacun un groupement hydrocarbyle en $C_1$-$C_8$; Y est un atome d'halogène, un atome d'hydrogène ou un groupement alcoxy; et Y est un nombre satisfaisant à la relation $2 \leq Y \leq 3$).

18. Système catalyseur selon la revendication 17, caractérisé en ce que le composé organo-aluminique est un trialkylaluminium, un mélange d'un trialkylaluminium et d'un halogénure de dialkylaluminium ou un alkylalumoxanne.

19. Procédé de préparation de polymères d'oléfines, consistant à homopolymériser ou copolymériser des oléfines en présence d'un système catalyseur selon l'une quelconque des revendications 16 à 18.